# EUROPÄISCHE PATENTSCHRIFT

(11) **EP 0 551 629 B1**
(45) Veröffentlichungstag und Bekanntmachung des Hinweises auf die Patenterteilung: **02.11.1994**
(21) Anmeldenummer: 92121597.6
(22) Anmeldetag: 18.12.1992
(51) Int. Cl.: F16B 13/06, C21D 9/00

(54) **Spreizdübel**
Expansion dowel
Cheville à expansion

(30) Priorität: 14.01.1992 DE 4200785
(43) Veröffentlichungstag der Anmeldung: 21.07.1993
(73) Patentinhaber: TOGE - Dübel A. Gerhard GmbH, D-90431 Nürnberg (DE)
(72) Erfinder: Gerhard, Anton, W-8500 Nürnberg 80 (DE)
(74) Vertreter: Rau, Manfred, Dr. Dipl.-Ing.

(56) Entgegenhaltungen:
- DE-A- 3 934 534
- DE-A- 4 010 082

## Beschreibung

Die Erfindung betrifft einen Spreizdübel nach dem Oberbegriff des Anspruches 1.

Bei einem derartigen aus der DE 39 34 534 A1 bekannten Spreizdübel ist der Spreiz-Konus aus Blech gebogen. Die eine Stoßfuge begrenzenden Kanten seiner Wand sind in Richtung der Mittel-Längs-Achse und tangential hierzu mittels einer Schwalbenschwanz Verriegelung formschlüssig miteinander verbunden. Diese Ausgestaltung weist den grundlegenden Vorteil auf, daß der Spreiz-Konus im Vergleich zu den üblichen massiven aus Zink-Druckguß bestehenden Spreiz-Konen ein verhältnismäßig geringes Volumen aufweist. Sein Gewicht ist also niedrig. Stahl ist erheblich billiger als Zink, so daß er kostengünstig ist. Darüber hinaus ist die Festigkeit von Stahl erheblich höher als die von Zink. Die Herstellung der formschlüssigen Verriegelung ist aber mit einigem herstellungstechnischem Aufwand verbunden.

Der Erfindung liegt die Aufgabe zugrunde, einen Spreizdübel der gattungsgemäßen Art so weiterzubilden, daß der Spreiz-Konus in besonders einfacher Weise herstellbar ist.

Diese Aufgabe wird erfindungsgemäß bei einem Spreizdübel der gattungsgemäßen Art durch die Merkmale im Kennzeichnungsteil des Anspruches 1 gelöst. Dadurch daß der aus Stahl-Blech bestehende Spreiz-Konus einer Oberflächenhärtung, in der Regel also einer Einsatzhärtung, unterzogen wird, bei der ein relativ weicher ungehärteter Kernbereich erhalten bleibt, ist der Spreiz-Konus einerseits sehr formstabil und andererseits aber nicht spröde. Die Kantenflächen seiner Wand können also entsprechend Anspruch 2 unverbunden und stumpf gegeneinander anliegen, ohne daß die Gefahr besteht, daß beim Einziehen des Spreiz-Konus in die Spreiz-Hülse die Kantenflächen gegeneinander verrutschen. Dies gilt insbesondere bei der weiteren Ausgestaltung nach den Ansprüch 3 und 4. Um einerseits gehärtete Oberflächenbereiche und andererseits einen ausreichend dicken ungehärteten Kernbereich zu erhalten, ist es zweckmäßig, wenn die Wand des Spreiz-Konus entsprechend den Ansprüchen 5 und 6 verhältnismäßig dick ist. Dann lassen sich Dicken der gehärteten Oberflächenbereiche einerseits und des ungehärteten Kernbereiches andererseits entsprechend den Ansprüchen 7 und 8 leicht erreichen. Die Ausgestaltung nach der Erfindung ermöglicht es, einen als Verdrehsicherung dienenden Anschlag entsprechend Anspruch 9 und insbesondere entsprechend Anspruch 1o auszugestalten, der dann in besonderer Weise nach den Ansprüchen 11 und 12 als Verliersicherung eingesetzt werden kann.

Weitere Merkmale, Vorteile und Einzelheiten der Erfindung ergeben sich aus der nachfolgenden Beschreibung eines Ausführungsbeispieles der Erfindung. Es zeigt
- Fig. 1: einen aus Spreiz-Hülse, Sprea-Schraube und Spreiz-Konus bestehenden Spreizdübel in einer Längs-Draufsicht,
- Fig. 2: den Spreiz-Konus des Spreizdübels vergrößerter Darstellung in einer Längs-Draufsicht,
- Fig. 3: eine Längs-Draufsicht auf den Spreiz-Konus in einer gegenüber Fig. 2 um 90° gedrehten Darstellung,
- Fig. 4: den Spreiz-Konus in stark vergrößerter Darstellung im Langsschnitt,
- Fig. 5: eine Stirnansicht des Spreiz-Konus entsprechend dem Sichtpfeil V in Fig. 4 und
- Fig. 6: eine Teil-Ansicht der Spreiz-Hülse in einer gegenüber Fig. 1 gedrehten Darstellung.

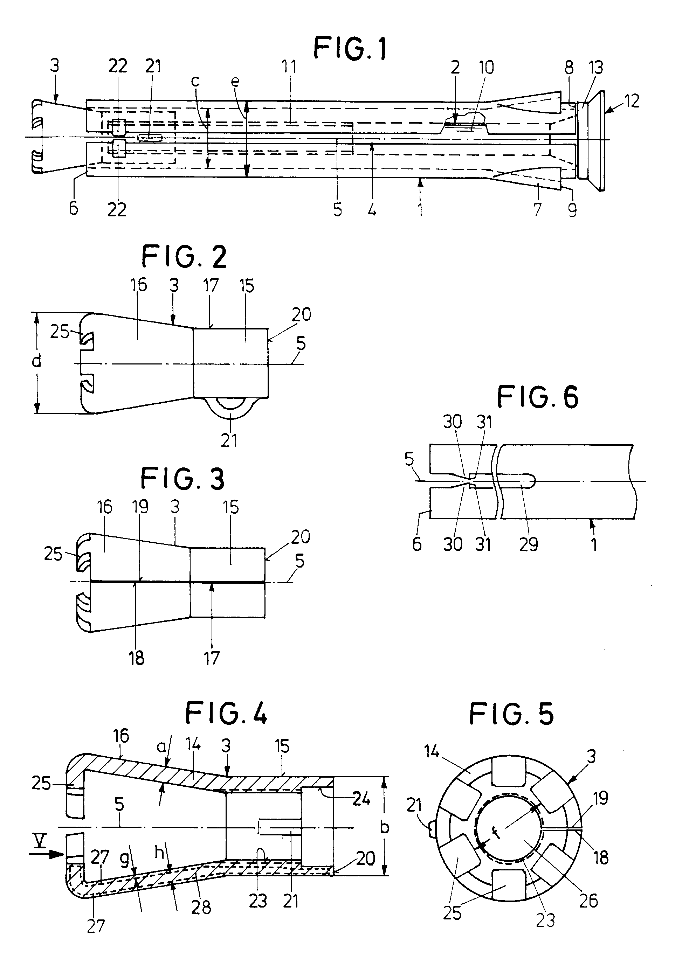

Der in Figur 1 dargestellte Spreizdübel besteht aus drei Teilen, nämlich einer Spreiz-Hülse 1, einer Spreiz-Schraube 2 und einem Spreiz-Konus 3. Spreiz-Hülse 1 und Spreiz-Schraube 2 sind in üblicher Weise ausgestaltet.

Die Spreiz-Hülse 1 ist zylindrisch ausgebildet und aus Blech gebogen. Sie weist einen sich über die volle lange der Hülse 1 erstreckenden Schlitz 4 auf, der parallel zur Mittel-Längs-Achse 5 verläuft. Darüber hinaus weist sie mindestens im Bereich ihres Einschub-Endes 6, also dort, wo sich der Spreiz-Konus 3 befindet, ein oder mehrere zusätzliche, in Fig. 1 nicht erkennbare Schlitze auf. Auch im Bereich des dem Einschub-Ende 6 entgegengesetzten Endes können noch ein oder mehrere Schlitze vorgesehen sein. Dort befinden sich auch mehrere aus der Spreiz-Hülse herausgeformte Vorsprünge 7, die zur Verankerung der Spreiz-Hülse 1 im Mauerwerk, Beton oder dergleichen dienen können, oder deren dem benachbarten Rand 8 der Hülse 1 zugewandte Stirnflächen als Auflageflächen 9 für am Mauerwerk, Beton oder dergleichen zu befestigende Gegenstände, wie beispielsweise Metallrahmen oder dergleichen, insbesondere Fensterrahmen oder Türrahmen, dienen.

Die Spreiz-Schraube 2 weist einen zylindrischen Bolzen 10 auf, der zumindest über einen Teil seiner Länge mit einem Außengewinde 11 versehen ist, das in den Spreiz-Konus 3 hineingeschraubt wird. Die Schraube 2 weist weiterhin einen Kopf 12 auf, der mit einem dem Bolzen 10 zugewandten Ringbund 13 versehen ist, der gegen den Rand 8 der Hülse 1 anliegt, so daß eine lagegenaue Abstützung des Kopfes 12 der Schraube 2 gegen die Hülse 1 erreicht ist. Bei Anziehen der Spreiz-Schraube 2 wird somit der Spreiz-Konus 3 in das Einschub-Ende 6 der Hülse 1 hineingezogen und weitet diese auf. Insoweit als der Spreizdübel bis jetzt beschrieben ist, ist er allgemein bekannt und in der Praxis bewährt.

Der Spreiz-Konus 3 ist aus Stahlblech gebogen; er weist also eine Wand 14 auf, deren Dicke a etwa überall gleich ist und mindestens 1,0 mm beträgt.

Der Konus 3 weist einen zylindrischen Abschnitt 15 auf, dessen Außendurchmesser b etwas kleiner ist als der Innendurchmesser c der Spreiz-Hülse 1. Die Differenz dieser beiden Durchmesser c und b soll höchstens ein bis wenige Zehntel Millimeter betragen, um ein Einführen dieses zylindrischen Abschnitts 15 bei der Montage des Konus 3 in die Hülse 1 vom Einschub-Ende 6 her zu ermöglichen. Ein nicht notwendiges Spiel sollte nicht vorhanden sein. An den zylindrischen Abschnitt 15 schließt sich ein konusförmiger, d. h. kegelstumpfförmiger Abschnitt 16 an, dessen Außendurchmesser sich vom Außendurchmesser b des zylindrischen Abschnitts 15 bis zu einem Außendurchmesser d erweitert, der etwa gleich aber nicht größer ist als der Außendurchmesser e der Hülse 1, so daß der Spreiz-Konus 3 in unverspreiztem Zustand der Hülse 1 nicht radial über diese vorsteht. Dieser kegelstumpfförmige Abschnitt 16 ist also ein Spreizabschnitt des Spreiz-Konus 3. Da der Spreiz-Konus 3 aus Blech gebogen ist, weist er eine Stoßfuge 17 auf, die von zwei Kantenflächen 18, 19 der Wand 14 begrenzt bzw. gebildet wird. Benachbart zum freien Ende 20 des zylindrischen Abschnitts 15 ist - diametral zur Stoßfuge 17 - ein Wandabschnitt ösenartig und radial zur Achse 5 aus der Wand 14 nach außen gebogen, wodurch ein Anschlag 21 gebildet wird. Dieser Anschlag 21 wird bei der Montage des Konus 3 in der Hülse 1 in den Schlitz 4 oder einen anderen der erwähnten Schlitze eingeführt und über mindestens einen Vorsprung 22 hinweggeschoben, der aus dem Material der Hülle 1 durch lokales Verquetschen erzeugt ist und in den Schlitz 4 hineinragt. Bei montiertem Konus 3 aber noch nicht gespreizter Hülse 1 liegt dieser Vorsprung 22 - wie Figur 1 erkennen läßt - auf der dem Einschub-Ende 6 abgewandten Seite des mindestens einen Vorsprungs 22, so daß der Konus 3 verliersicher in der Hülse 1 gehalten ist, auch wenn er nicht durch die Schraube 2 in der Hülse 1 gehalten wird. Gegen ein Hineinrutschen des Konus 3 in die Hülse 1 ist ersterer durch seinen kegelstumpfförmigen Abschnitt 16 gesichert. Außerdem wird durch den im Schlitz 4 verschiebbaren Anschlag 21 eine Verdrehsicherung für den Spreiz-Konus 3 relativ zur Spreiz-Hülse 1 geschaffen, da nur bei einer solchen relativen Unverdrehbarkeit gegeneinander bei Verdrehen der Schraube 2 gegenüber der Hülse 1 der Konus 3 in die Hülse 1 hineingezogen werden kann.

Im zylindrischen Abschnitt 15 ist ein Innengewinde 23 zur Aufnahme des Außengewindes 11 des Bolzens 10 ausgebildet, wobei im Bereich des freien Endes 20 an der Innenseite der Wand 14 eine Hinterschneidung 24 ausgebildet ist, die dazu dient, das Einführen des Bolzens 10 in den zylindrischen Abschnitt 15 zu erleichtern. Das Innengewinde 23 läuft am Übergang des zylindrischen Abschnittes 15 in den kegelstumpfförmigen Abschnitt 16 aus.

Am außerhalb der Spreiz-Hülse 1 liegenden Ende des kegelstumpfförmigen Abschnitts 16 sind radial nach innen, also zur Achse 5 hin, gebogene Zungen 25 vorgesehen, die eine stirnseitige Öffnung 26 des Konus 3 begrenzen, deren Durchmesser f etwa dem Außendurchmesser des Außengewindes 11 der Schraube 2 entspricht, so daß beim Einziehen des Konus 3 in die Hülse 1 der Konus 3 hier noch einmal zusätzlich gegenüber dem Bolzen 10 der Schraube 2 zentriert wird, wenn diese die Öffnung 26 durchdringt.

Wie Figuren 3 und 5 entnehmbar ist, liegen die Kantenflächen 18, 19 der Wand 14 des Konus 3 geradlinig und eben unter Bildung der Stoßfuge 17 gegeneinander an, d.h. sie verlaufen radial zur Achse 5. Daraus folgt, daß in Umfangsrichtung des Konus 3 in der Wand 14 verlaufende Kräfte wechselseitig von einer Kantenfläche 18 oder 19 auf die andere Kantenfläche 19 oder 18 übertragen werden können.

Der Spreiz-Konus 3 besteht - wie bereits ausgeführt - aus Stahlblech, wobei ein relativ weicher Stahl eingesetzt wird, der gut stanzbar und gut kalt verformbar ist, da die Formung des Konus 3 kalt durch Biegen erfolgt. Der Konus 3 ist durch Einsatzhärtung im Bereich seiner gesamten Oberfläche gehärtet, wodurch sich gehärtete Oberflächenbereiche 27 ergeben, deren Dicke g etwa 0,1 mm beträgt. Zwischen diesen gehärteten Oberflächenbereichen 27 verbleibt ein ungehärteter Kernbereich 28, dem die Aufgabe zukommt, den Konus 3 insgesamt nicht zu spröde zu machen. Die gehärteten Oberflächenbereiche 27 und der zwischen ihnen liegende ungehärtete Kernbereich 28 sind in Fig. 4 unten durch gestrichelte Linien angedeutet. Durch einen ungehärteten, also relativ weichen und nach wie vor verformbaren Kernbereich 28 einerseits und die diesen umgebenden gehärteten Oberflächenbereiche 27 andererseits erhält der Konus 3 insgesamt eine solche Festigkeit, daß er trotz Fehlens jeder Verbindung der Kantenflächen 18, 19 miteinander beim Einziehen des Konus 3 in die Spreiz-Hülse 1 formbeständig bleibt und nicht eingedrückt werden kann. Da die Stege des Innengewindes 23 ebenfalls gehärtet werden, ist das Innengewinde 23 besonders hoch belastbar. Dadurch, daß andererseits die Dicke a der Wand 14 mindestens 1.0 mm beträgt, ist auch im Bereich des Innengewindes 23 noch ein ausreichend dicker ungehärteter Kernbereich 28 vorhanden. Dieser ungehärtete Kernbereich 28 sollte insgesamt eine Dicke h von 0,4 bis 0,5 mm haben. Dies ist auch im Bereich des Innengewindes 23 ohne weiteres erreichbar, da das Gewinde durch Verformung und nicht durch Schneiden erzeugt wird, d.h. beim Verformen der Innenseite der Wand 14 zur Erzeugung des Innengewindes 23 wird Material in Richtung zur Achse 5 hin verformt.

Die Oberflächenhärte der gehärteten Oberflächenbereiche 27 ist in der Regel größer 65 Rockwell.

In Fig. 6 ist in einer der oben erwähnten in Fig. 1 nicht dargestellten zusätzlichen Schlitze 29 erkennbar, der in Umfangsrichtung versetzt zum Schlitz 4 angeordnet ist und sich - ausgehend vom Einschub-Ende 6 - nur über einen Teil der Lange der Spreiz-Hülse 1 parallel zur Achse 5 erstreckt. Dieser Schlitz 29 ist bei der Herstellung der Hülse 1 durch Stanzen erzeugt. Er weist zwei einander entsprechende Vorsprünge 30 auf, die in ihrer Funktion den Vorsprüngen 22 entsprechen. Da sie beim Stanzen des Schlitzes 29 erzeugt werden, können sie mit aufeinanderzu gerichteten Spitzen 31 versehen sein, so daß der ösenförmige Anschlag 21 des Spreiz-Konus 3 bei der Montage des Dübels hier gehalten werden kann, indem die Spitzen 31 in den ösenartigen Anschlag 21 eingreifen.

Dadurch ist der Konus 3 nicht nur verliersicher an der Hülse 1 gehalten; er ist auch zum Einführen der Spreiz-Schraube 2 axial gegenüber der Hülse 1 unverschiebbar gehalten. Diese Vorsprünge 30 dienen insoweit also auch als verbesserte Montagehilfe.

Das Haupteinsatzgebiet der geschilderten Spreiz-Konen 3 ist bei Spreiz-dübeln, deren Spreiz-Hülse 1 einen Außen-Durchmesser e von 10 oder auch 12 mm hat.

## Patentansprüche

1. Spreizdübel, bestehend aus einer zumindest über einen Teil ihrer Länge mit mindestens einem Schlitz (4, 29) versehenen Spreiz-Hülse (1), einer konzentrisch zu einer gemeinsamen Mittel-Längs-Achse (5) hierin angeordneten und sich mit einem Kopf (12) an einem Rand (8) der Spreiz-Hülse (1) gegen diese abstützenden Spreiz-Schraube (2) und einem an einem dem Rand (8) entgegengesetzt liegenden Einschub-Ende (6) der Spreiz-Hülse (1) unverdrehbar gegenüber dieser gehaltenen und axial in dieser verschiebbaren Spreiz-Konus (3), der ein Innengewinde (23) zur Aufnahme eines Außengewindes (11) der Spreiz-Schraube (2) und einen Spreizabschnitt (16) zum Aufspreizen des dem Einschub-Ende (6) zugeordneten Bereichs der Spreiz-Hülse (1) beim Hineinziehen dieses Spreizabschnitts mittels der Spreiz-Schraube (2) in die Spreiz-Hülse (1) aufweist, der aus Stahl-Blech gebogen ist und der eine Stoßfuge (17) begrenzende Kantenflächen (18, 19) seiner Wand (14) aufweist, die in Richtung der Mittel-Längs-Achse (5) verlaufen und tangential hierzu gegeneinander anliegen, dadurch gekennzeichnet, daß der Spreiz-Konus (3) über seine gesamte Oberfläche gehärtete Oberflächenbereiche (27) und zwischen diesen einen ungehärteten Kernbereich (28) aufweist.

2. Spreizdübel nach Anspruch 1, dadurch gekennzeichnet, daß die Kantenflächen (18, 19) unverbunden stumpf gegeneinander anliegen.

3. Spreizdübel nach Anspruch 1, dadurch gekennzeichnet, daß die Kantenflächen (18, 19) geradlinig in Richtung der Mittel-Längs-Achse (5) verlaufen.

4. Spreizdübel nach Anspruch 1, dadurch gekennzeichnet, daß die Kantenflächen (18, 19) radial zur Mittel-Längs-Achse (5) verlaufen.

5. Spreizdübel nach Anspruch 1, dadurch gekennzeichnet, daß die Dicke (a) der Wand (14) des Spreiz-Konus (3) mindestens 1,0 mm beträgt.

6. Spreizdübel nach Anspruch 5, dadurch gekennzeichnet, daß die Dicke (a) der Wand (14) des Spreiz-Konus (3) 1,0 bis 1,3 mm beträgt.

7. Spreizdübel nach Anspruch 1, dadurch gekennzeichnet, daß die Dicke (g) der gehärteten Oberflächenbereiche (27) mindestens 0,1 mm beträgt.

8. Spreizdübel nach Anspruch 1, dadurch gekennzeichnet, daß die Dicke (h) des ungehärteten Kernbereiches mindestens 0,4 mm beträgt.

9. Spreizdübel nach Anspruch 1, dadurch gekennzeichnet, daß der Spreiz-Konus (3) eine sich an den Spreiz-Abschnitt (16) anschließenden zylindrischen Abschnitt (15) aufweist, der mit einem aus der Wand (14) ausgeformten, diametral zur Stoßfuge (17) angeordneten Anschlag (21) versehen ist.

10. Spreizdübel nach Anspruch 9, dadurch gekennzeichnet, daß der Anschlag (21) ösenförmig ausgebildet ist.

11. Spreizdübel nach Anspruch 9, dadurch gekennzeichnet, daß der Anschlag (21) zur Bildung einer Verliersicherung zwischen Spreiz-Hülse (1) und Spreiz-Konus (3) an mindestens einem in einen Schlitz (4, 29) ragenden, an der Spreiz-Hülse (1) ausgebildeten Vorsprung (22, 30) angeordnet ist.

12. Spreizdübel nach Anspruch 10 und 11, dadurch gekennzeichnet, daß der mindestens eine Vorsprung (30) mit einer in den ösenförmigen Anschlag (21) ragenden Spitze (31) versehen ist.

## Claims

1. An expanding plug comprising an expanding sleeve (1) provided at least over a part of its length with at least one slot (4, 29), an expanding screw (2) arranged in the expanding sleeve (1) concentrically to a common central longitudinal axis (5) and supporting with a head (12) on a rim (8) of the expanding sleeve (1) against the latter, and an expanding cone (3) held in an untwistable manner with respect to the expanding sleeve (1) and axially displaceable in the latter on a plug-in end (6) of the expanding sleeve (1) located opposite the rim (8), which expanding cone (3) comprises an internal thread (23) for taking up an external thread (11) of the expanding screw (2) and an expanding section (16) for expanding the region of the expanding sleeve (1) associated to the plug-in end (6), when pulling this expanding section into the expanding sleeve (1) by means of the expanding screw (2), which is bent from steel sheet and which comprises edge surfaces (18, 19) of its wall (14) limiting a joint gap (17), which edge surfaces extend in the direction of the central longitudinal axis (5) and tangentially to the latter bear against each other, characterized in that the expanding cone (3) is provided with hardened surface regions (27) extending over its entire surface and with an unhardened basic region (28) between the surface regions (27).

2. An expanding plug according to claim 1, characterized in that the edge surfaces (18, 19) bear unconnected and flush against each other.

3. An expanding plug according to claim 1, characterized in that the edge surfaces (18, 19) extend linearly in the direction of the central longitudinal axis (5).

4. An expanding plug according to claim 1, characterized in that the edge surfaces (18, 19) extend radially to the central longitudinal axis (5).

5. An expanding plug according to claim 1, characterized in that the thickness (a) of the wall (14) of the expanding cone (3) is at least 1.0

6. An expanding plug according to claim 5, characterized in that the thickness (a) of the wall (14) of the expanding cone (3) is 1.0 to 1.3 mm.

7. An expanding plug according to claim 1, characterized in that the thickness (g) of the hardened surface regions (27) is at least 0.1 mm.

8. An expanding plug according to claim 1, characterized in that the thickness (h) of the unhardened basic region is at least 0.4 mm.

9. An expanding plug according to claim 1, characterized in that the expanding cone (3) comprises a cylindrical section (15) following the expanding section (16), which is provided with an abutment (21) formed out of the wall (14) and arranged diametrically to the joint gap (17).

10. An expanding plug according to claim 9, characterized in that the abutment (21) is formed in the shape of an eyelet.

11. An expanding plug according to claim 9, characterized in that the abutment (21) is arranged at at least one projection (22, 30) projecting into a slot (4, 29) and formed at the expanding sleeve (1) to form a safety device to prevent loss between the expanding sleeve (1) and the expanding cone (3).

12. An expanding plug according to claims 10 and 11, characterized in that the at least one projection (30) is provided with a tip (31) projecting into the eyelet-shaped abutment (21).

## Revendications

1. Cheville à expansion constituée d'une douille expansible (1), pourvue d'au moins une fente (4, 29) sur au moins une partie de sa longueur, d'une vis d'expansion (2) qui y est disposée concentriquement à un axe longitudinal médian commun (5) et dont la tête (12) prend appui contre un bord (8) de la douille expansible (1), et d'un cône d'expansion (3) qui est maintenu contre une extrémité d'introduction (6), opposée au bord (8), de la douille expansible (1) sans possibilité de rotation par rapport à cette dernière et avec possibilité de déplacement dans cette dernière et qui comporte un filet intérieur (23), destiné à recevoir un filet extérieur (11) de la vis d'expansion (2), et un segment d'expansion (16) pour déployer la zone de la douille expansible (1) située à l'extrémité d'introduction (6) lors de l'engagement de ce segment d'expansion dans la douille expansible (1) au moyen de la vis d'expansion (2), ledit cône d'expansion étant réalisé en tôle cintrée et sa paroi (14) comportant des rives (18, 19) qui délimitent un joint d'about (17), qui s'étendent dans le sens de l'axe longitudinal médian (5) et qui sont appliquées tangentiellement l'une contre l'autre, caractérisée en ce que le cône d'expansion (3) comporte, sur toute sa surface, des zones superficielles trempées (27) et, entre celles-ci, une zone de coeur non trempée (28).

2. Cheville à expansion selon la revendication 1, caractérisée en ce que les rives (18, 19) sont appliquées bord à bord et sans liaison entre elles.

3. Cheville à expansion selon la revendication 1, caractérisée en ce que les rives (18, 19) s'étendent de manière rectiligne dans le sens de l'axe longitudinal médian (5).

4. Cheville à expansion selon la revendication 1, caractérisée en ce que les rives (18 19) s'étendent radialement à l'axe longitudinal médian (5).

5. Cheville à expansion selon la revendication 1, caractérisée en ce que l'épaisseur (a) de la paroi (14) du cône d'expansion (3) est au moins égale à 1,0 mm.

6. Cheville à expansion selon la revendication 5, caractérisée en ce que l'épaisseur (a) de la paroi (14) du cône d'expansion (3) est comprise entre 1,0 et 1,3 mm.

7. Cheville à expansion selon la revendication 1, caractérisée en ce que l'épaisseur (g) des zones superficielles trempées (27) est au moins égale à 0,1 mm.

8. Cheville à expansion selon la revendication 1, caractérisée en ce que l'épaisseur (h) de la zone de coeur non trempée est au moins égale à 0,4 mm.

9. Cheville à expansion selon la revendication 1, caractérisée en ce que le cône d'expansion (3) comporte un segment cylindrique (15) qui prolonge le segment d'expansion (16) et qui est pourvu d'une butée (21) qui est réalisée dans le matériau de la paroi (14) et qui est diamétralement opposée au joint d'about (17).

10. Cheville à expansion selon la revendication 9, caractérisée en ce que la butée (21) présente une forme d'anse.

11. Cheville à expansion selon la revendication 9, caractérisée en ce que, pour former une sécurité antiperte entre la douille expansible (1) et le cône d'expansion (3), la butée (21) est disposée contre au moins une saillie (22, 30) qui dépasse dans une fente (4, 29) et qui est réalisée sur la douille expansible (1).

12. Cheville à expansion selon les revendications 10 et 11, caractérisée en ce que la saillie (30), au nombre d'au moins une, est munie d'une pointe (31) qui s'engage dans la butée (21) en forme d'anse.
